Europäisches Patentamt

European Patent Office

Office européen des brevets

(19)

(11) Veröffentlichungsnummer: **0 109 999**
**B1**

(12) # EUROPÄISCHE PATENTSCHRIFT

(45) Veröffentlichungstag der Patentschrift:
**09.03.88**

(21) Anmeldenummer: **82810522.1**

(22) Anmeldetag: **03.12.82**

(51) Int. Cl.⁴: **D 03 C 1/00**

(54) **Kupplungsanordnung zum Steuern der Schäfte einer Webmaschine.**

(43) Veröffentlichungstag der Anmeldung:
**13.06.84 Patentblatt 84/24**

(45) Bekanntmachung des Hinweises auf die Patenterteilung:
**09.03.88 Patentblatt 88/10**

(84) Benannte Vertragsstaaten:
**CH DE FR IT LI**

(73) Patentinhaber: **GEBRÜDER SULZER AKTIENGESELLSCHAFT, Zürcherstrasse 9, CH-8401 Winterthur (CH)**

(72) Erfinder: **Jülich, Werner, Riedenerstrasse 74, CH-8304 Wallisellen (CH)**

(56) Entgegenhaltungen:
**EP - A - 0 050 160**
**DE - A - 2 909 131**
**DE - B - 1 050 145**
**DE - B - 1 284 787**
**FR - A - 2 064 634**
**GB - A - 987 589**

**IBM TECHNICAL DISCLOSURE BULLETIN, Band 1, Nr. 4, Dezember 1958, Seite 12, New York, USA**

## Beschreibung

Die Erfindung betrifft eine Kupplungsanordnung zum Steuern der Schäfte einer Webmaschine, mit einer mindestens eine Nut aufweisenden intermittierend drehenden Antriebswelle und einer in die Nut einkuppelbaren auf einem auf der Antriebswelle drehbar gelagerten Exzenter angeordneten Klinke sowie mit einer den Exzenter umschliessenden Lasche einer Kurbelstange für den Antrieb zu den Schäften, ferner mit einer die Klinke in Einkupplungsstellung mit der Antriebswelle sichernden Verriegelungseinrichtung und einer Vorrichtung zur Steuerung von Klinke und Schäften entsprechend dem Bindungsprogramm für das zu erzeugende Gewebe.

Eine solche Anordnung ist in der EP-A-50 160 beschrieben. Aus der deutschen Auslegeschrift Nr. 1 050 145 ist eine ähnliche Kupplung bekannt, welche eine Verriegelungseinrichtung aufweist, die auf derselben Achse wie die Klinke gelagert ist, wobei die Klinke und die Verriegelungseinrichtung in axialer Richtung der Antriebswelle nebeneinander liegen. Diese Einrichtung liesse sich auch für eine Kupplungsanordnung zum Steuern von Schäften einer Webmaschine verwenden. Bei Schaftmaschinen besteht aber im allgemeinen das Problem, dass die einzelnen Triebe zu den Schäften möglichst schmal ausgeführt werden müssen, damit das ganze Aggregat nicht zu breit wird. Je breiter eine Schaftmaschine im Verhältnis zum Schaftpaket ist, desto ungünstiger werden die Belastungsverhältnisse in den Übertragungshebeln zwischen Schaftmaschine und dem Schafttrieb.

Es ist Aufgabe der vorliegenden Erfindung, eine Kupplungsanordnung mit einer Verriegelungseinrichtung zu schaffen, welche in axialer Richtung weniger Platz als bekannte Ausführungen benötigt. Diese Aufgabe wird erfindungsgemäss dadurch gelöst, dass die Verriegelungseinrichtung ein auf der Klinke drehbar gelagerter Hebel ist, über den Hebel der Vorrichtung zum Steuern der Klinke auf diese einwirken. Der Verriegelungshebel wird in der Verriegelungsstellung unter Wirkung einer Feder gegen einen auf dem Exzenter angeordneten Anschlag herangezogen. Der Hebel liegt in der ausgekuppelten Stellung über eine Anschlagkante an einer entsprechenden Anschlagkante der Klinke auf. Klinke und Verriegelungshebel liegen in einer Ebene, wobei der Verriegelungshebel mit einem runden Vorsprung in eine Aussparung der Klinke in Form einer teilweise nicht geschlosssenen Bohrung eingreift. Im weiteren wird die Erfindung anhand von Ausführungsbeispielen und mit Bezugnahme auf die Figuren beschrieben.

Fig. 1 ist ein Schnitt durch eine erfindungsgemäss ausgebildete Kupplungsanordnung zur Steuerung von Webschäften einer Webmaschine;

Fig. 2–4 veranschaulichen weitere Positionen der Anordnung.

Eine von der Hauptwelle der Webmaschine aus absatzweise jeweils um 180° in Drehung versetzte Antriebswelle 1 enthält zwei Nuten 2, in welche die Nase 3 einer bei 4 schwenkbar gelagerten Kupplungsklinke 5 eingreifen kann. Die Klinke 5 ist auf einem auf Welle 1 drehbar gelagerten Exzenter 6 gelagert, der von einer Lasche 7 umschlossen ist. Diese bildet das Ende einer Kurbelstange 10, welche bei 8 an einem Übertragungsgestänge 9 angelenkt ist, über das die gemäss Pfeil 11 entstehende Hin- und Herbewegung der Lasche 7 und Kurbelstange 10 auf einen zugehörigen, nur schematisch angedeuteten Schaft 111 einer Webmaschine übertragen wird.

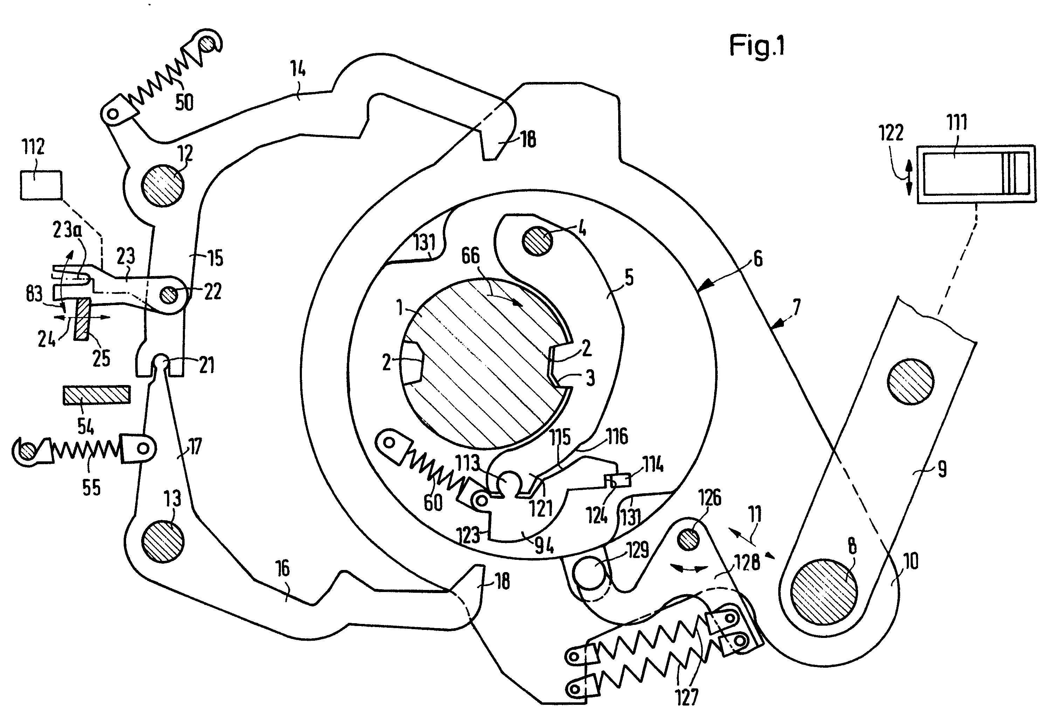

Auf Welle 1 sind eine ganze Anzahl, z. B. sechs bis zwölf der in Fig. 1 dargestellten Antriebsteile 6, 7 angeordnet, nämlich zu jedem Schaft 111 der Webmaschine ein Exzenter 6 und eine Lasche 7. Die gesamten Teile 1, 6 und 7 bilden die sogenannte Exzentermaschine für Antrieb und Steuerung sämtlicher Webschäfte 111 der Webmaschine. Die Schäfte 111 werden entsprechend einem Bindungsprogramm für die Kettfäden in Hoch- und Tieffachstellung bewegt.

Zur Betätigung der Klinke 5 während des Betriebes sind zwei auf den ortsfesten Lagerzapfen 12, 13 schwenkbar gelagerte Steuerhebel 14, 15 bzw. 16, 17 eingebaut, die an den freien Enden Haken 18 aufweisen. Der Steuerhebel 14, 15 steht unter der Wirkung einer Zugfeder 50, die bestrebt ist, den Hebel 14, 15 im Uhrzeigersinn zu verschwenken. Der Steuerhebel 16, 17 steht unter der Wirkung einer Zugfeder 55, die bestrebt ist, den Hebel im Gegenzeigersinn zu schwenken. Die Arme 15, 17 sind bei 21 aneinander gelenkt. Die durch die Federn 50, 55 verursachte Schwenkbewegung wird durch einen ortsfesten Anschlag 54 begrenzt, welcher im Schwenkweg des Armes 17 liegt.

Am Arm 15 ist eine gemäss Pfeil 83 schwenkbare Platine 23 bei 22 angelenkt, die mit einem während des Betriebes ständig gemäss Pfeil 24 hin- und herbewegten Hubmesser 25 zusammen arbeiten kann. Platine 23 wird von einer schematisch angedeuteten Programmsteuervorrichtung 112 aus entsprechend dem Bindungsprogramm in die in Fig. 1 dargestellte, abgesenkte Position bewegt, in der sie mit Hubmesser 25 eingekuppelt ist. Platine 23 kann von der Steuervorrichtung 112 aus auch in die strichpunktiert angedeutete, wirkungslose, obere Position 23a gehoben werden, in der sie vom Hubmesser 25 ausgekuppelt ist.

Die Klinke 5 besitzt an ihrem freien Ende eine Klaue 121. In ihr ist die Nase 113 eines Verriegelungshebels 94 untergebracht, wodurch der Verriegelungshebel um 113 verschwenkbar angeordnet ist. Der Hebel 94 steht unter der Wirkung einer Zugfeder 60, die bestrebt ist, Hebel 94 um 113 und zugleich Klinke 5 um 4 jeweils im Uhrzeigersinn zu verschwenken. Die Verschwenkung von Hebel 94 wird durch einen auf dem Exzenter 6 angebrachten Anschlag 114 begrenzt.

Die Wirkungsweise ist folgende. Bei der Position der Teile nach Fig. 1 sind die Steuerhebel 14–17 mit ihren Haken 18 aufgrund der mit dem Hubmesser 25 eingekuppelten Platine 23 in der ausgeschwenkten, wirkungslosen Stellung. Bei der Drehung der Welle 1 gemäss Pfeil 66 läuft der Verriegelungshebel 94 am Haken 18 des Hebels 16, 17 vorbei, ohne auf diesen aufzulaufen. Klinke 5 bleibt demzufolge eingekuppelt und verriegelt, der Schaft 111 wird weiterhin gemäss Pfeil 122 auf und ab bewegt.

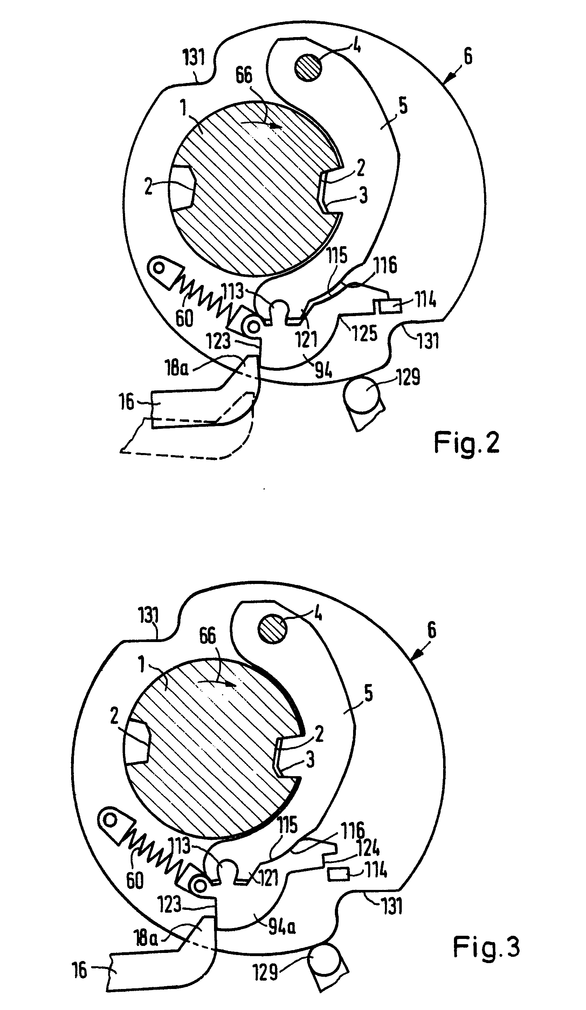

Anschliessend wird das Hubmesser 25 in Fig. 1 nach links bewegt, so dass Arm 17 auf den Anschlag 54 aufläuft. Zugleich läuft auch Platine 23 nach links. Es sei nun angenommen, dass Platine 23 von der Programmsteuervorrichtung 112 aus in wirkungslose Stellung angehoben wird. Die Haken 18, die in der wirksamen Stellung 18a gemäss Fig. 2 eingeschwenkt sind, verbleiben in ihr, solange Platine 23 vom Hubmesser 25 ausgekuppelt bleibt. Der Hebel 94 kann dann mit der Anschlagfläche 123 auf einen der haken 18 auflaufen. Bei weiterer Drehung der Welle 1 wird Hebel 94 entgegen der Wirkung der Feder 60 um 113 im Gegenzeigersinn in die Position 94a nach Fig. 3 verschwenkt (1. Phase des Auskupplungsvorganges der Klinke 5). Die Flächen 115, 116 berühren nunmehr einander. Die Schulter 124 des Hebels 94 ist vom Anschlag 114 abgehoben. Die Auskupplung der Klinke 5 ist damit vorbereitet.

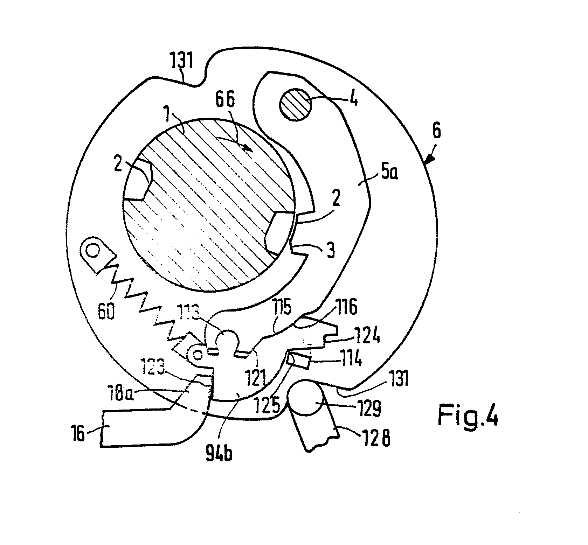

Bei weiterer Drehung der Welle 1 wird die Klinke 5 in die in Fig. 4 dargestellte Auskupplungsposition 5a verschwenkt. An dieser Verschwenkung nimmt der Verriegelungshebel 94 teil und wird in der 2. Phase des Auskupplungsvorganges von Klinke 5 in die Stellung 94b nach Fig. 4 bewegt, in der seine Ausnehmung 125 auf den Anschlag 114 aufläuft. Dadurch wird die Schwenkbewegung von Hebel 94 und Klinke 5 begrenzt. Zugleich läuft eine auf einem um 126 schwenkbar gelagerten, unter Wirkung von Federn 127 stehenden Hebel 128 gelagerte Spannrolle 129 in eine der Ausnehmungen 313 des Exzenters 6 ein. Die Kupplungsanordnung befindet sich nunmehr in verriegelter Auskupplungsposition. Die Schäfte 111 werden bei der weiteren Drehung der Welle 1 nicht mehr mitbewegt, sondern verbleiben in der Hoch- bzw. Tieffachstellung, die sie innehaben.

Dieser Zustand hält so lange an, bis Platine 23 von der Steuervorrichtung 112 aus wieder abgesenkt und durch das Hubmesser 25 angetrieben wird. Dadurch werden die Steuerhebel 14–17 wieder im Rhythmus des Hubmessers 25 aus- und eingeschwenkt. Nach dem ersten Ausschwenken schnappen Klinke 5 und Hebel 94 aus der Auskupplungsposition nach Fig. 4 unmittelbar in die Einkupplungsstellung nach Fig. 1 zurück. Die Teile sind auch hier wieder verriegelt, weil Schulter 124 auf den Anschlag 114 schlägt. Nunmehr wird der Schaft 111 wieder so lange mitgenommen, bis Platine 23 wieder vom Hubmesser 25 ausgekuppelt wird.

**Patentansprüche**

1. Kupplungsanordnung zum Steuern der Schäfte einer Webmaschine, mit einer mindestens eine Nut (2) aufweisenden intermittierend drehenden Antriebswelle (1) und einer in die Nut (2) einkuppelbaren auf einem auf der Antriebswelle (1) drehbar gelagerten Exzenter (6) angeordneten Klinke (5) sowie mit einer den Exzenter (6) umschliessenden Lasche (7) einer Kurbelstange (10) für den Abtrieb zu den Schäften (111), ferner mit einer die Klinke (5) in Einkupplungsstellung mit der Antriebswelle (1) sichernden Verriegelungseinrichtung (94) und einer Vorrichtung (112, 14–17) zur Steuerung von Klinke (5) und Schäften (111) entsprechend dem Bindungsprogramm für das zu erzeugende Gewebe, dadurch gekennzeichnet, dass die Verriegelungseinrichtung (94) ein auf der Klinke (5) drehbar gelagerter Hebel ist, über den Hebel (14–17) der Vorrichtung (112) zur Steuerung der Klinke (5) auf diese einwirken.

2. Anordnung nach Anspruch 1, dadurch gekennzeichnet, dass ein Verriegelungshebel (94) in der Verriegelungsstellung unter Wirkung einer Feder (60) gegen einen auf dem Exzenter (6) angeordneten Anschlag (114) gehalten ist.

3. Anordnung nach Anspruch 1, dadurch gekennzeichnet, dass der Verriegelungshebel (94) eine Anschlagkante (115) zur Begrenzung seiner Schwenkbewegung aufweist, mit der er bei Wegschwenkung von dem Anschlag (114) gegen eine entsprechende Anschlagkante (116) der Klinke (5) gedrückt ist.

4. Anordnung nach Anspruch 1, dadurch gekennzeichnet, dass Klinke (5) und Verriegelungshebel (94) in einer Ebene liegen.

5. Anordnung nach Anspruch 1, dadurch gekennzeichnet, dass der Verriegelungshebel (94) mittels eines runden Vorsprunges (113) in eine Aussparung in der Klinke (5) in Form einer nicht geschlossenen Bohrung eingreift.

**Claims**

1. A coupling arrangement for controlling the shafts of a loom and comprising: an intermittently rotating drive shaft (1) formed with at least one groove (2); a pawl (5) engageable therein and disposed on an eccentric (6) rotatably mounted on the drive shaft (1); a lug (17) which is part of a connecting rod (10) which outputs to the shaft (111) and which extends around the eccentric (6); locking means (94) securing the pawl (5) in its coupled position with the drive shaft (1); and means (112, 14–17) for controlling the pawl (5) and shafts (111) in accordance with the weaving program for the required cloth, characterised in that the locking means (94) are in the form of a lever which is rotatably mounted on the pawl (5) and by way of which levers (14–17) of the pawl-controlling means (112) act on the pawl.

2. An arrangement according to claim 1, characterised in that in the locking position a locking lever (94) is retained in the locking position by a spring (60) in engagement with an abutment (114) on the eccentric (6).

3. An arrangement according to claim 1, characterised in that the locking lever (94) has an abutment edge (115) which is operative to limit pivoting movement of the lever (94) and by means of which the same is pressed, as it pivots away from the abutment (114), against a corresponding abutment edge (116) of the pawl (5).

4. An arrangement according to claim 1, characterised in that the pawl (5) and locking lever (94) are coplanar.

5. An arrangement according to claim 1, characterised in that the locking lever (94) engages by way of a round projection (113) in a recess in the pawl (5), such recess being in the form of an unclosed bore.

### Revendications

1. Dispositif d'accouplement pour la commande des lames d'un métier à tisser comportant un arbre moteur (1) présentant au moins une cannelure (2) et tournant par intermittence, ainsi qu'un cliquet (5) pouvant s'engager dans la cannelure (2), disposé sur un excentrique (6) monté en rotation sur l'arbre moteur (1), comportant encore un collier (7), entourant l'excentrique (6), d'une bielle directrice (10) de sortie vers les lames (111), ainsi qu'un dispositif de verrouillage (94) bloquant le cliquet (5) en position d'accouplement avec l'arbre moteur (1), et un dispositif (112, 14–17) de commande du cliquet (5) et des lames (111) suivant le programme d'armure du tissu à produire, caractérisé en ce que le dispositif de verrouillage (94) est un levier monté en rotation sur le cliquet (5), par l'intermédiaire duquel des leviers (14–17) du dispositif (112) agissent sur le cliquet (5) pour le commander.

2. Dispositif selon la revendication 1, caractérisé en ce qu'un levier de verrouillage (94) est maintenu en position de verrouillage contre une butée (114) disposée sur l'excentrique (6), sous l'effet d'un ressort (60).

3. Dispositif selon la revendication 1, caractérisé en ce que le levier de verrouillage (94) comporte une arête de butée (115) destinée à limiter son pivotement, au moyen de laquelle il est pressé contre une arête de butée (116) correspondante du cliquet (5), lorsque dans son mouvement de pivotement, il quitte la butée (114).

4. Dispositif selon la revendication 1, caractérisé en ce que le cliquet (5) et le levier de verrouillage (94) sont situés dans un même plan.

5. Dispositif selon la revendication 1, caractérisé en ce que le levier de verrouillage (94) s'engage dans un évidement du cliquet (5) qui a la forme d'un perçage non fermé.

Fig.1

0 109 999

Fig.2

Fig.3

Fig.4